# EUROPÄISCHE PATENTSCHRIFT

(11) **EP 1 651 699 B1**
(45) Veröffentlichungstag und Bekanntmachung des Hinweises auf die Patenterteilung: **10.01.2007**
(21) Anmeldenummer: 04763901.8
(22) Anmeldetag: 06.08.2004
(51) Int. Cl.: C08G 59/10, C14C 3/22

(54) **EPICHLORHYDRINAMIN-POLYMERE ZUR OBERFLÄCHENBEHANDLUNG VON LEDER**
EPICHLOROHYDRIN AMINE POLYMERS USED FOR TREATING THE SURFACE OF LEATHER
POLYMERE EPICHLORHYDRINAMINE POUR LE TRAITEMENT DE SURFACE DU CUIR

(30) Priorität: 06.08.2003 DE 10336452
(43) Veröffentlichungstag der Anmeldung: 03.05.2006
(73) Patentinhaber: BASF Aktiengesellschaft, 67056 Ludwigshafen (DE)
(72) Erfinder: WOLF, Gerhard, 68775 Ketsch (DE); HÜFFER, Stephan, 67063 Ludwigshafen (DE); DECKER, Jürgen, 67346 Speyer (DE); SCHERR, Günter, 67065 Ludwigshafen (DE); REESE, Oliver, 68219 Mannheim (DE)
(74) Vertreter: Isenbruck, Günter
(86) Internationale Anmeldenummer: PCT/EP2004/008873
(87) Internationale Veröffentlichungsnummer: WO 2005/014687

(56) Entgegenhaltungen:
- EP-A- 0 431 739
- EP-A- 0 738 608
- WO-A-97/28687
- US-A- 3 573 095
- US-A- 3 738 945

## Beschreibung

Die vorliegende Erfindung betrifft ein Verfahren zur Herstellung von Epichlorhydrinamin-Polymeren sowie die Verwendung dieser Epichlorhydrinamin-Polymere zur Oberflächenbehandlung von Lederhalbfabrikaten.

Epichlorhydrinamin-Polymere sind aus dem Stand der Technik bekannt. So beschreibt beispielsweise die EP-A 0 884 944 antibakterielle Zusammensetzungen, die ein ionisches Polymer und ein Dodecylammoniumsalz umfassen. Beispiele für geeignete ionische Polymere sind Epichlorhydrinamin-Polymere, die durch Umsetzung eines Halogenepoxids mit einem Amin erhalten werden. Als besondere Beispiele für ionische Polymere werden die Reaktionsprodukte von N,N,N',N'-Tetramethyl-1,2-ethandiamin bzw. N-Dimethylamin mit (Chlormethyl)oxiran erwähnt. Die Verwendung von Epichlorhydrinamin-Polymeren zur Oberflächenbehandlung von Lederhalbfabrikaten ist in der EP-A-0 884 944 nicht erwähnt.

Die EP-B 0 738 608 betrifft härtbare Zusammensetzungen, die eine spezifische wasserlösliche hochmolekulare Verbindung mit einer kationischen Gruppe in ihrer Hauptmolekülkette und eine andere spezifische wasserlösliche hochmolekulare Verbindung mit einem Vemetzungsvermögen umfasst. Diese härtbare Zusammensetzung, die zur Herstellung von Druckmedien für Tintenstrahlsysteme verwendet wird, enthält als wasserlösliche hochmolkulare Verbindung das Produkt einer Alternativadditionspolymerisation zwischen Epichlorhydrin und einem Dialkylamin bzw. Dialkanolamin.

Die im Stand der Technik beschriebenen Polymere aus Epichlorhydrin und einem Amin eignen sich nur bedingt zur Behandlung von Ledermaterialien. Die Behandlung von Lederhalbfabrikaten ist beispielsweise in "Bibliothek des Leders", Band 5 "Das Färben von Leder", hier insbesondere Seiten 168 ff. "Kationische Färbereihilfsmittel", und Band 6 "Lederzurichtung - Oberflächenbehandlung des Leders" beschrieben.

Aufgabe der vorliegenden Erfindung ist somit die Bereitstellung von Epichlorhydrinamin-Polymeren, die sich zur Oberflächenbehandlung von Lederhalbfabrikaten eignen.

Diese Aufgabe wird durch ein Verfahren zur Herstellung von wässrigen Lösungen von Epichlorhydrinamin-Polymeren gelöst. Das Verfahren ist durch die folgenden Verfahrensschritte gekennzeichnet:
(a) Umsetzung von mindestens zwei unterschiedlichen Aminen mit mindestens einem Epichlorhydrin-Derivat als Alkylierungsmittel in Wasser über einen Zeitraum, der ausreichend ist, dass kein freies Alkylierungsmittel mehr nachgewiesen werden kann, wobei eine Reaktionsmischung (I) resultiert;
(b) gegebenenfalls Abkühlen der aus Verfahrensschritt (a) resultierenden Reaktionsmischung (I);
(c) Versetzen dieser Reaktionsmischung (I) mit mindestens einer Säure und gegebenenfalls Wasser, bis der pH-Wert der Reaktionsmischung (I) 4 bis 10 beträgt, wobei eine Reaktionsmischung (II) resultiert, und
(d) gegebenenfalls Umsetzen der Reaktionsmischung (II) mit einem Kationisierungsmittel, wobei die Amine Dimethylaminopropylamin und Benzylamin sind.

In der vorliegenden Erfindung werden als Amine Dimethylaminopropylamin und Benzylamin verwendet.

Unter Epichlorhydrin-Derivaten, die im erfindungsgemäßen Verfahren in Verfahrensschritt (a) verwendet werden können, werden im Sinne der vorliegenden Erfindung vorzugsweise alle organischen Verbindungen verstanden, die eine Epoxideinheit und ein Halogenatom enthalten und mit Aminen unter Vernetzung reagieren können. Vorzugsweise werden in dem Verfahrensschritt (a) des erfindungsgemäßen Verfahrens Epichlorhydrin-Derivate verwendet, die ausgewählt sind aus der Gruppe bestehend aus α-Epichlorhydrin, Bisepoxide, Bischlorhydroxyverbindungen und Phosgen.

Das Verhältnis von verwendeten Aminen zu verwendetem/verwendeten Epichlorhydrin-Derivat(en) in Verfahrensschritt (a) beträgt vorzugsweise 0,8 : 1,2 bis 1,2 : 0,8, besonders bevorzugt 0,9 : 1,1 bis 1,1 : 0,9, insbesondere 0,92 : 1,08 bis 1,08 : 0,92.

Die Umsetzung der mindestens zwei unterschiedlichen Amine mit mindestens dem einen Epichlorhydrin-Derivat findet vorzugsweise bei einer Temperatur von 40 bis 100 °C, besonders bevorzugt 50 bis 90 °C, insbesondere 80 bis 85 °C, statt. Die Zeitdauer der Umsetzung in Verfahrensschritt (a) ist abhängig von den verwendeten Aminen und dem Epichlorhydrin-Derivat(en) und der jeweiligen Temperatur. Daher ist eine genaue Zeitangabe für die Umsetzung in Verfahrensschritt (a) nicht möglich, sondern hängt von dem jeweiligen Umsetzungssystem und den verwendeten Umsetzungsparametem ab. In einer bevorzugten Ausführungsform der vorliegenden Erfindung ist die Umsetzung in Verfahrensschritt (a) aber dann beendet, wenn ein Nachweis von freiem Alkylierungsmittel negativ ist. Ein Beispiel für einen derartigen Nachweis, der zur Bestimmung des Endes der Umsetzung in Verfahrensschritt (a) des erfindungsgemäßen Verfahrens verwendet werden kann, ist der Preußmann-Test. Im Allgemeinen beträgt der Zeitraum für die Umsetzung in Verfahrensschritt (a) 30 Minuten bis 4 Stunden.

Die aus Verfahrensschritt (a) resultierende Reaktionsmischung (I) wird anschließend in Verfahrensschritt (b) gegebenenfalls auf Temperaturen von 0 bis 40 °C abgekühlt.

Die Reaktionsmischung (I) wird anschließend in Verfahrensschritt (c) mit mindestens einer Säure und gegebenenfalls Wasser versetzt, so dass der pH-Wert der Reaktionsmischung vorzugsweise 4 bis 10, besonders bevorzugt 6 bis 8, insbesondere 6,7 bis 7,3, beträgt. Dabei kann jede dem Fachmann bekannte Säure verwendet werden. Zweckmäßigerweise verwendet man allerdings Ameisensäure oder Salzsäure. Aus Verfahrensschritt (c) resultiert eine Reaktionsmischung (II).

Die so erhaltene Reaktionsmischung (II) kann abschließend im Verfahrensschritt (d) gegebenenfalls mit einem Kationisierungsmittel umgesetzt werden. Beispiele für geeignete Kationisierungsmittel sind Dimethylsulfat oder Methyliodid, wobei die Umsetzung mit dem Kationisierungsmittel im Wesentlichen zur Feineinstellung der Eigenschaften des abschließend erhaltenen Epichlorhydrinamin-Polymers dient. Bei der Umsetzung mit dem Kationisierungsmittel werden in dem Polymer verstärkt kationische Gruppen im Polymer erzeugt. Das Verhältnis von Kationisierungsmittel zu dem aus Verfahrensschritt (c) resultierenden Polymer kann stark variieren und beträgt beispielsweise 0 bis 1 Äquivalent Kationisierungsmittel pro Monomereinheit des Polymers.

Weiterer Gegenstand der vorliegenden Erfindung sind Epichlorhydrinamin-Polymere, die durch das oben beschriebene Verfahren erhältlich sind.

Diese Epichlorhydrinamin-Polymere weisen vorzugsweise mindestens zwei allgemeine Struktureinheiten (I) und (II) auf, 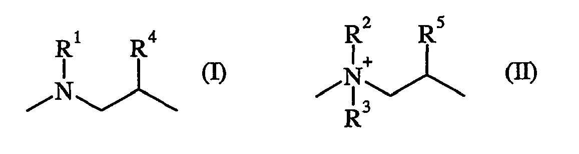 wobei R¹, R², R³, R⁴, und R⁵ die folgende Bedeutung haben
R¹ und R²: -(CH₂)₃N(CH₃)₂, -CH₂C₆H₅,
R³: H, Alkyl
R⁴ und R⁵: H oder OH.

Die allgemeinen Struktureinheiten (I) und (II) sind in dem Epichlorhydrinamin-Polymer statistisch, alternierend oder als Blöcke vorhanden.

Unter einem Polymer wird im Sinne der vorliegenden Erfindung eine Substanz verstanden, die aus solchen Molekülen aufgebaut ist, in denen eine Art oder mehrere Arten von Atomen oder Atom-Gruppierungen, beispielsweise die oben genannten allgemeinen Struktureinheiten (I) und (II), wiederholt aneinander gereiht sind. Dabei beträgt die Anzahl der Grundbausteine vorzugsweise mindestens 3, besonders bevorzugt mindestens 5, insbesondere mindestens 10. Dabei sind die Amin- und/oder Ammoniumeinheiten des erfindungsgemäßen Epichlorhydrinamin-Polymers von mindestens zwei unterschiedlichen Aminen abgeleitet. Die Epichlorhydrineinheiten, die Bestandteil des erfindungsgemäßen Polymers sind, können von einem Epichlorhydrin-Derivat oder mehreren, beispielsweise zwei oder drei Epichlorhydrin-Derivaten abgeleitet werden.

In der vorliegenden Erfindung werden die Amin- und/oder Ammoniumeinheiten des Epichlorhydrinamin-Polymers von Dimethylaminopropylamin und Benzylamin abgeleitet. Besonders bevorzugt ist dabei, dass die Amin- und/oder Ammoniumeinheiten aus 0,5 bis 0,8, vorzugsweise 0,6 bis 0,7, Anteilen Dimethylaminopropylamin und 0,2 bis 0,5, vorzugsweise 0,3 bis 0,4, Anteilen Benzylamin zusammengesetzt sind.

In einer bevorzugten Ausführungsform weist das erfindungsgemäße Epichlorhydrinamin-Polymer ein Verhältnis von Amin- und/oder Ammoniumeinheiten zu Epichlorhydrineinheiten von 0,8 : 1,2 bis 1,2 : 0,8, besonders bevorzugt 0,9 : 1,1 bis 1,1 : 0,9, insbesondere 0,92: 1,08 bis 1,08 : 0,92, auf.

Das erfindungsgemäße Epichlorhydrinamin-Polymer weist vorzugsweise ein gewichtsmittleres Molekulargewicht von 1 · 10² bis 2 · 10⁵ g/mol, bevorzugt 1 · 10³ bis 1 · 10⁵ g/mol, insbesondere 4 · 10³ bis 5 · 10⁴ g/mol, auf. Der Restmonomerengehalt liegt vorzugsweise unter 2%, besonders bevorzugt unter 0,1 %, insbesondere unter 250 ppm. Darüber hinaus beträgt die Viskosität des erfindungsgemäßen Epichlorhydrinamin-Polymers vorzugsweise 10 bis 50 mPas, besonders bevorzugt 25 bis 40 mPas, insbesondere 28 bis 35 mPas. Der Feststoffanteil des erfindungsgemäßen Epichlorhydrinamin-Polymers beträgt vorzugsweise 5 bis 60 Gew.-%, besonders bevorzugt 10 bis 40 Gew.-%, insbesondere 20 bis 25 Gew.-%.

Die Aminzahl des erfindungsgemäßen Epichlorhydrinamin-Polymers beträgt vorzugsweise 0,5 bis 1,7 mmol/g, besonders bevorzugt 0,7 bis 1,5 mmol/g, insbesondere 1,0 bis 1,2 mmol/g. Der Restgehalt an freien Chloridionen in dem erfindungsgemäßen Epichlorhydrinamin-Polymer beträgt vorzugsweise 0,5 bis 2,0 mmol/g, besonders bevorzugt 0,9 bis 1,5 mmol/g, insbesondere 1,1 bis 1,3 mmol/g.

Falls als Säure in Verfahrensschritt (c) Ameisensäure verwendet wird, so beträgt der Restanteil an Ameisensäure in dem erfindungsgemäßen Epichlorhydrinamin-Polymer 0,5 bis 8 Gew.-%, besonders bevorzugt 1 bis 5 Gew.-%, insbesondere 2 bis 3 Gew.-%.

Weiterer Gegenstand der vorliegenden Erfindung ist die Verwendung der erfindungsgemä-ßen Epichlorhydrinamin-Polymere zur Oberflächenbehandlung von Lederhalbfabrikaten.

Die Verwendung des erfindungsgemäßen Epichlorhydrinamin-Polymers zur Oberflächenbehandlung von Lederhalbfabrikaten ist in der zeitgleich eingereichten deutschen Patentanmeldung DE... mit dem Titel "Oberflächliche Anwendung kationischer oder amphoterer Polymere auf Lederhalbfabrikaten" beschrieben. Das in dieser Patentanmeldung beschriebene Verfahren zur Behandlung von Leder umfasst die folgenden Verfahrensschritte:
(a) Behandeln eines Leders mit einer wässrigen Lösung mindestens eines erfindungsgemäßen Epichlorhydrinamin-Polymers durch Rollcoating und/oder Walzenauftrag und/oder Spritzauftrag und
(b) Behandeln des so erhaltenen Leders mit einem anionischen Hilfsmittel im Fass.

Als anionisches Hilfsmittel kann beispielsweise ein Farbstoff, ein Fettungsmittel und/oder Nachgerbungsmittel verwendet werden.

Für weitere diesbezügliche Ausführungen wird auf die oben genannte DE... verwiesen.

Die vorliegende Erfindung zeigt gegenüber dem Stand der Technik eine Vielzahl an Vorteilen: Die erfindungsgemäßen Epichlorhydrinamin-Polymere ziehen kontrolliert auf das Leder auf. Dadurch wird beispielsweise ein Farbstoff oder ein Fett sehr gut auf dem Leder fixiert. Durch die Verwendung der erfindungsgemäßen Epichlorhydrinamin-Polymere ist es somit möglich, ein hohes Echtheitsniveau des behandelten Leders (Farbechtheit) zu erhalten und gleichzeitig die einzelnen Rezepturkosten im Vergleich zum Stand der Technik zu reduzieren. Darüber hinaus wird durch Verwendung der erfindungsgemäßen Epichlorhydrinamin-Polymere die Lederqualität insgesamt verbessert, insbesondere bezüglich Egalität, Farbtiefe und Fehleranzahl. Darüber hinaus eignen sich die erfindungsgemäßen Epichlorhydrinamin-Polymere auch zur Erzeugung von Modifikationen der Lederoberfläche. So können beispielsweise durch die erfindungsgemäßen Epichlorhydrinamin-Polymere Teilbereiche des Leders gefärbt bzw. gefettet werden. Darüber hinaus ermöglicht die Verwendung der erfindungsgemäßen Epichlorhydrinamin-Polymere die Herstellung von bedrucktem oder gemustertem Leder. Beispiele hierfür sind Wolkeneffekte oder eine gezielte Ungleichmäßigkeit auf dem Leder.

Die Erfindung wird anhand der folgenden Beispiele näher erläutert.

### AUSFÜHRUNGBEISPIELE

### a Herstellung eines erfindungsgemäßen Epichlorhydrin-Dimethylaminopropylamin/Benzylamin-Polymers:

1020 g (10 mol) Dimethylaminopropylamin und 267,5 g (2,5 mol) Benzylamin werden in 1519,1 g Wasser gemischt. Die Lösung/Suspension wird auf 50 °C erwärmt. Anschließend wird bei einer Geschwindigkeit vom 16 ml/min 931 ml Epichlorhydrin (1098,4 g/11,875 mol) unter Erwärmung auf 85 °C zugetropft und zwei Stunden bei 85 °C gerührt. Das Rühren bei 85 °C wird fortgesetzt, bis sich kein freies Alkylierungsmittel mehr nachweisen lässt (Preußmann-Test). Die Reaktionsmischung wird abgekühlt, mit 2 1 Wasser verdünnt und mit 85 %iger Ameisensäure auf einen pH-Wert von 7,0 eingestellt. Weiteres Wasser wird zugegeben, bis der Feststoffgehalt 21 % beträgt.

Das erfindungsgemäße Epichlorhydrinamin-Polymer weist die folgenden Eigenschaften auf:
Aminzahl: 1,09 mmol/g,
Chlorid: 1,19 mmol/g,
Gebundenes Chlor: ungefähr 1,2 mmol/g,
Viskosität: 32 mPas,
Feststoff: 21 %,
Ameisensäure: 2,6 %

### b Beschreibung des Preußmann-Tests am Beispiel von Dimethylsulfat

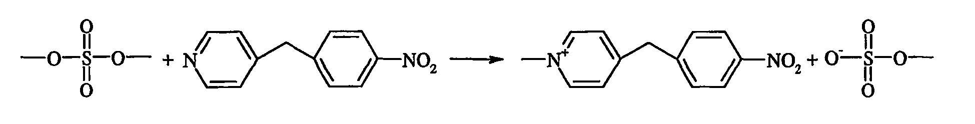

3 bis 4 Tropfen der auf freies Alkylierungsmittel zu untersuchenden Lösung wird in ein Reagenzglas gegeben, mit 1 ml Pufferlösung versetzt und mit 1 ml Preußmann-Reagenz versetzt. Die resultierende Lösung wird für 30 Minuten auf 80 °C erhitzt, mit Eiswasser abgekühlt und mit 1 ml einer Carbonatlösung versetzt. Bei Anwesenheit eines freien Alkylierungsmittels färbt sich die Lösung intensiv blau.
- Pufferlösung:: 40,85 g Kaliumhydrogenphthalat in 1 l dest. Wasser einwiegen, 99,6 g dieser Lösung mit 0,4 ml 0,2 N Natronlauge versetzen und auf 200 ml mit dest. Wasser auffüllen
- Preußmann-Reagenz:: 4-(p-Nitrobenzyl)pyridin als 5%ige Lösung in Aceton
- Carbonatlösung:: 138,21 g Kaliumcarbonat in 1 l dest. Wasser lösen

## Patentansprüche

1. Verfahren zur Herstellung von wässrigen Lösungen von Epichlorhydrinamin-Polymeren, **gekennzeichnet durch** die folgenden Verfahrensschritte:
(a) Umsetzung von zwei unterschiedlichen Aminen mit mindestens einem Epichlorhydrin-Derivat als Alkylierungsmittel in Wasser über einen Zeitraum, der ausreichend ist, dass kein freies Alkylierungsmittel mehr nachgewiesen werden kann, wobei eine Reaktionsmischung (I) resultiert;
(b) gegebenenfalls Abkühlen der aus Verfahrensschritt (a) resultierenden Reaktionsmischung (I);
(c) Versetzen dieser Reaktionsmischung (I) mit mindestens einer Säure und gegebenenfalls Wasser, bis der pH-Wert der Reaktionsmischung (I) 4 bis 10 beträgt, wobei eine Reaktionsmischung (II) resultiert, und
(d) gegebenenfalls Umsetzen der Reaktionsmischung (II) mit einem Kationisierungsmittel, wobei die Amine Dimethylaminopropylamin und Benzylamin sind.

2. Verfahren nach Anspruch 1, **dadurch gekennzeichnet, dass** das mindestens eine Epichlorhydrin-Derivat ausgewählt ist aus der Gruppe bestehend aus α-Epichlorhydrin, Bisepoxide, Bischlorhydroxyverbindungen und Phosgen.

3. Verfahren nach Anspruch 1 oder 2, **dadurch gekennzeichnet, dass** das Verhältnis von Aminen zu Epichlorhydrin-Derivat(en) 0,8 : 1,2 bis 1,2 : 0,8 beträgt.

4. Verfahren nach einem der Ansprüche 1 bis 3, **dadurch gekennzeichnet, dass** die Umsetzung in Verfahrensschritt (a) bei einer Temperatur von 40 bis 100 °C erfolgt.

5. Epichlorhydrinamin-Polymer, erhältlich durch ein Verfahren gemäß einem der Ansprüche 1 bis 4.

6. Epichlorhydrinamin-Polymer nach Anspruch 5, **dadurch gekennzeichnet, dass** das Polymer mindestens zwei allgemeine Struktureinheiten (I) und (II) aufweist, 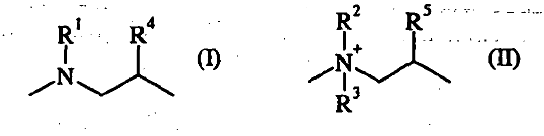 wobei R¹, R², R³, R⁴, und R⁵ die folgende Bedeutung haben
R¹ und R²: -(CH₂)₃N(CH₃)₂, -CH₂C₆H₅,
R³: H, Alkyl
R⁴ und R⁵: H oder OH.

7. Epichlorhydrinamin-Polymer nach Anspruch 5 oder 6, **dadurch gekennzeichnet, dass** die Amin- und/oder Ammoniumeinheiten von Dimethylaminopropylamin und Benzylamin abgeleitet sind, wobei die Amin- und/oder Ammoniumeinheiten aus 0,5 bis 0,8 Anteilen Dimethylaminopropylamin und 0,2 bis 0,5 Anteilen Benzylamin zusammengesetzt sind.

8. Epichlorhydrinamin-Polymer nach einem der Ansprüche 5 bis 7, **dadurch gekennzeichnet, dass** das Polymer ein gewichtsmittleres Molekulargewicht von 1 · 10² bis 2 · 10⁵ g/mol aufweist.

9. Verwendung eines Epichlorhydrinamin-Polymers gemäß einem der Ansprüche 5 bis 8 zur Oberflächenbehandlung von Lederhalbfabrikaten.

## Claims

1. A process for the preparation of aqueous solutions of epichlorohydrinamine polymers, comprising the following process steps:
(a) reaction of two different amines with at least one epichlorohydrin derivative as an alkylating agent in water over a period which is sufficient for free alkylating agents to be no longer detectable, a reaction mixture (I) resulting;
(b) if appropriate, cooling of the reaction mixture (I) resulting from process step (a);
(c) addition of at least one acid and, if appropriate, water to this reaction mixture (I) until the pH of the reaction mixture (I) is from 4 to 10, a reaction mixture (II) resulting, and
(d) if appropriate, reaction of the reaction mixture (II) with a cationizing agent, the amines being dimethylaminopropylamine and benzylamine.

2. The process according to claim 1, wherein the at least one epichlorohydrin derivative is selected from the group consisting of α-epichlorohydrin, bisepoxides, bischlorohydroxy compounds and phosgene.

3. The process according to claim 1 or 2, wherein the ratio of amines to epichlorohydrin derivative or derivatives is from 0.8 : 1.2 to 1.2 : 0.8.

4. The process according to any of claims 1 to 3, wherein the reaction in process step (a) is effected at from 40 to 100°C.

5. An epichlorohydrinamine polymer obtainable by a process according to any of claims 1 to 4.

6. The epichlorohydrinamine polymer according to claim 5, wherein the polymer has at least two general structural units (I) and (II) 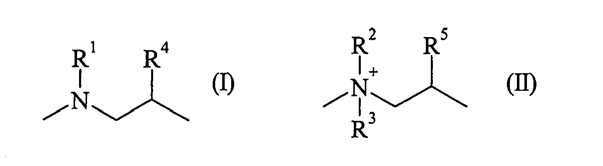 where R¹, R², R³, R⁴ and R⁵ have the following meanings:
R¹ and R² : -(CH₂)₃N(CH₃)₂, -CH₂C₆H₅,
R³: H, alkyl
R⁴ and R⁵: H or OH.

7. The epichlorohydrinamine polymer according to claim 5 or 6, wherein the amine and/or ammonium units are derived from dimethylaminopropylamine and benzylamine, the amine and/or ammonium units being composed of from 0.5 to 0.8 part of dimethylaminopropylamine and from 0.2 to 0.5 part of benzylamine.

8. The epichlorohydrinamine polymer according to any of claims 5 to 7, wherein the polymer has a weight average molecular weight of from 1 · 10² to 2 · 10⁵ g/mol.

9. The use of an epichlorohydrinamine polymer according to any of claims 5 to 8 for the surface treatment of semifinished leather products.

## Revendications

1. Procédé de préparation de solutions aqueuses de polymères d'épichlorhydrinamine, **caractérisé par** les étapes de procédé suivantes :
(a) réaction de deux amines différentes avec au moins un dérivé d'épichlorhydrine en tant qu'agent d'alkylation, dans de l'eau, pendant un laps de temps suffisant pour que l'on ne puisse plus mettre en évidence d'agent d'alkylation libre, avec obtention d'un mélange réactionnel (I),
(b) le cas échéant, refroidissement du mélange réactionnel (I) obtenu à l'étape de réaction (a),
(c) mélange de ce mélange réactionnel (I) avec au moins un acide et le cas échéant de l'eau, jusqu'à ce que le pH du mélange réactionnel (I) ait une valeur de 4 à 10, avec obtention d'un mélange réactionnel (II), et
(d) le cas échéant, réaction du mélange réactionnel (II) avec un agent de cationisation, les amines étant de la diméthylaminopropylamine et de la benzylamine.

2. Procédé selon la revendication 1, **caractérisé en ce que** le au moins un dérivé d'épichlorhydrine est choisi dans le groupe formé par l'α-épichlorhydrine, des bisépoxydes, des composés bischlorohydroxylés et le phosgène.

3. Procédé selon la revendication 1 ou 2, **caractérisé en ce que** la proportion d'amines au(x) dérivé(s) d'épichlorhydrine est de 0,8:1,2 à 1,2:0,8.

4. Procédé selon l'une quelconque des revendications 1 à 3, **caractérisé en ce que** la réaction de l'étape de procédé (a) a lieu à une température de 40 à 100°C.

5. Polymère d'épichlorhydrinamine, que l'on peut obtenir par un procédé selon l'une quelconque des revendications 1 à 4.

6. Polymère d'épichlorhydrinamine selon la revendication 5, **caractérisé en ce que** le polymère présente au moins deux unités structurelles générales (I) et (II) 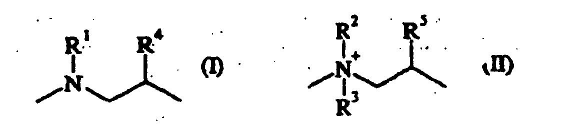 dans lesquelles R¹, R², R³, R⁴ et R⁵ ont les significations suivantes :
R¹ et R² -(CH₂)₃N(CH₃)₂, -CH₂C₆H₅,
R³ H, alkyle,
R⁴ et R⁵ H ou OH .

7. Polymère d'épichlorhydrinamine selon la revendication 5 ou 6, **caractérisé en ce que** les unités amine et/ou ammonium sont dérivées de diméthylaminopropylamine et de benzylamine, les unités amine et/ou ammonium étant composées de 0,5 à 0,8 parties de diméthylaminopropylamine et de 0,2 à 0,5 parties de benzylamine.

8. Polymère d'épichlorhydrinamine selon l'une quelconque des revendications 5 à 7, **caractérisé en ce que** le polymère présente une moyenne pondérale de poids moléculaire de 1.10² à 2.10⁵ g/mole.

9. Utilisation d'un polymère d'épichlorhydrinamine selon l'une quelconque des revendications 5 à 8 pour le traitement de surface d'articles en cuir.
